# EUROPÄISCHE PATENTANMELDUNG

(11) **EP 3 264 757 A1**
(43) Veröffentlichungstag der Anmeldung: **03.01.2018**
(21) Anmeldenummer: 17177849.1
(22) Anmeldetag: 26.06.2017
(51) Int. Cl.: H04N 9/31, G03B 21/26, G03B 33/08, G09B 9/36

(54) **BELEUCHTUNGSVORRICHTUNG FÜR EINEN LICHTMODULATOR AUFWEISENDEN PROJEKTOR**

(30) Priorität: 27.06.2016 DE 102016111731
(71) Anmelder: Carl Zeiss AG, 73447 Oberkochen (DE)
(72) Erfinder: KRAUSE, Axel, 07751 Jena (DE); GEISSLER, Enrico, 07749 Jena (DE); KRÄNERT, Jürgen, 07749 Jena (DE)
(74) Vertreter: Patentanwälte Geyer, Fehners & Partner mbB

(57) **Zusammenfassung**

Es wird eine Beleuchtungsvorrichtung für einen Lichtmodulator (3, 21) aufweisenden Projektor (2) bereitgestellt, die
ein erstes und ein zweites Farbrad (11, 13) aufweist, die hintereinander angeordnet und jeweils um eine Achse (16, 17) drehbar sind, wobei eine erste Filterfläche (14) des ersten Farbrads in Drehrichtung mindestens drei hintereinander angeordnete Flächensegmente (R, G, B), die bei Drehung nacheinander in einen Beleuchtungsstrahlengang (6) der Beleuchtungsvorrichtung hineinstehen und jeweils Beleuchtungsstrahlung eines anderen Teilbereiches aus dem sichtbaren Wellenlängenbereich weiterleiten, aufweist, wobei mindestens eines der Flächensegmente (R, G, B) der ersten Filterfläche (14) ferner Beleuchtungsstrahlung (5) aus dem Infrarotbereich weiterleitet, und wobei eine zweite Filterfläche (15) des zweiten Farbrads ein erstes Flächensegment (19), das nur Beleuchtungsstrahlung (5) aus dem sichtbaren Wellenlängenbereich weiterleitet und ein zweites Flächensegment (20), das nur Beleuchtungsstrahlung (5) aus dem Infrarotbereich weiterleitet, aufweist, wobei das erste und zweite Flächensegment (19, 20) in Drehrichtung hintereinander angeordnet sind und bei Drehung nacheinander in den Beleuchtungsstrahlengang (6) hineinstehen.

## Beschreibung

Die vorliegende Erfindung betrifft eine Beleuchtungsvorrichtung für einen einen Lichtmodulator aufweisenden Projektor.

Bei solchen Projektoren, die häufig auch als digitale Projektoren bezeichnet werden, kann der Lichtmodulator zeitsequentiell mit Licht verschiedener Farben aus den verschiedenen Wellenlängenbereichen beleuchtet werden, um zeitsequentiell Farbteilbilder zu erzeugen, die für einen Betrachter dann nur in zeitlicher Überlagerung als mehrfarbiges Bild wahrnehmbar sind. Um zeitsequentiell die verschiedenen Farben zu erzeugen, kann beispielsweise ein Farbrad mit einer ersten Filterfläche, die um eine Achse drehbar ist, vorgesehen sein, wobei die erste Filterfläche in Drehrichtung mindestens drei hintereinander angeordnete Flächensegmente aufweist, die bei Drehung der ersten Filterfläche nacheinander in einen Beleuchtungsstrahlengang von einer mehrfarbigen Lichtquelle bis zum Lichtmodulator einstehen. Durch Drehung des Farbrades kann so der Lichtmodulator nacheinander mit den verschiedenen Farben beleuchtet werden.

Solche digitale Projektoren können z.B. für Flugsimulatoren eingesetzt werden. Hier besteht der Wunsch, gleichzeitig mit dem für das menschliche Auge sichtbaren mehrfarbigen Bild auch ein Infrarotbild projizieren zu können, um somit z.B. den Einsatz von Nachtsichtgeräten trainieren zu können. Aus der US 8,382,297 B2 ist es bekannt, dazu ein spezielles Farbrad vorzusehen, das neben den mindestens drei hintereinander angeordneten Flächensegmenten für Wellenlängen aus dem sichtbaren Wellenlängenbereich zumindest noch ein Flächensegment für Wellenlängen aus dem Infrarotbereich aufweist, so dass bei Drehung des Farbrades zeitsequentiell auch eine Infrarotbeleuchtung des Lichtmodulators durchführbar ist. Dies ist jedoch aufwendig, da das Farbrad entsprechend geändert werden muss. Auch ist die Ansteuerung des Farbrads und des Lichtmodulators in diesem Fall geändert, da ein zusätzliches Flächensegment im Farbrad vorgesehen ist. Des Weiteren wird die Lichtleistung für das sichtbare Bild reduziert, selbst wenn kein Infrarotbild projiziert werden soll, da das Farbrad stets das Flächensegment für den Infrarotbereich aufweist.

Ausgehend hiervon ist es daher Aufgabe der Erfindung, eine Beleuchtungsvorrichtung für einen einen Lichtmodulator aufweisenden Projektor vorzusehen, die die eingangs genannten Schwierigkeiten möglichst vollständig behebt.

Erfindungsgemäß wird die Aufgabe durch eine Beleuchtungsvorrichtung für einen einen Lichtmodulator aufweisenden Projektor gelöst, wobei die Beleuchtungsvorrichtung einen Beleuchtungsstrahlengang, der eingekoppelte Beleuchtungsstrahlung mit Wellenlängen aus dem sichtbaren Wellenlängenbereich und aus dem Infrarotbereich bis zu seinem Ende führt, um den Lichtmodulator zu beleuchten, ein erstes eine erste Filterfläche aufweisendes und ein zweites eine zweite Filterfläche aufweisendes Farbrad umfasst, die hintereinander angeordnet sind und deren Filterflächen, die jeweils um eine Achse drehbar sind, nur zum Teil in den Beleuchtungsstrahlengang hineinstehen, wobei die erste Filterfläche in Drehrichtung mindestens drei hintereinander angeordnete Flächensegmente (oder mindestens drei hintereinander angeordnete Flächenabschnitte), die bei Drehung der ersten Filterfläche nacheinander in den Beleuchtungsstrahlengang hineinstehen und jeweils die Beleuchtungsstrahlung eines anderen Teilbereiches aus dem sichtbaren Wellenlängenbereich im Beleuchtungsstrahlengang weiterleiten, aufweist, wobei mindestens eines der Flächensegmente (bzw. mindestens einer der Flächenabschnitte) der ersten Filterfläche ferner Beleuchtungsstrahlung aus dem Infrarotbereich weiterleitet, und wobei die zweite Filterfläche ein erstes Flächensegment, das nur Beleuchtungsstrahlung aus dem sichtbaren Wellenlängenbereich weiterleitet, und ein zweites Flächensegment, das nur Beleuchtungsstrahlung aus dem Infrarotbereich weiterleitet, aufweist, wobei das erste und zweite Flächensegment in Drehrichtung hintereinander angeordnet sind und bei Drehung der zweiten Filterfläche nacheinander in den Beleuchtungsstrahlengang hineinstehen.

Durch das Vorsehen von zwei Farbrädern kann die zeitsequentielle Bereitstellung der Beleuchtungsstrahlung aus dem sichtbaren Wellenlängenbereich und der Beleuchtungsstrahlung aus dem Infrarotbereich individuell in einfacher Art und Weise an die vorliegenden Rahmenbedingungen angepasst werden. Insbesondere ist es möglich, keine Beleuchtungsstrahlung aus dem Infrarotbereich bereitzustellen und die volle Lichtleistung für die Beleuchtungsstrahlung aus dem sichtbaren Wellenlängenbereich vorzusehen. Dies kann z.B. dadurch erreicht werden, dass das zweite Farbrad aus dem Strahlengang herausbewegt wird.

Die erste Filterfläche kann der zweiten Filterfläche vor- oder nachgeordnet sein (in Richtung zum Ende des Beleuchtungsstrahlenganges hin).

Die beiden Filterflächen können jeweils als transmissive Filter ausgebildet sein.

Insbesondere kann zwischen den beiden Filterflächen bzw. zwischen den beiden Farbrädern ein Integrator oder ein Lichtmischstab vorgesehen sein, der zur Homogenisierung der Beleuchtungsstrahlung dient, um den Lichtmodulator möglichst gleichmäßig ausleuchten zu können.

Die beiden Filterflächen können jeweils ringförmig ausgebildet sein. Es ist jedoch auch möglich, dass die Filterflächen kreisförmig sind.

Insbesondere kann die Drehfrequenz der ersten Filterfläche größer als die Drehfrequenz der zweiten Filterfläche sein. Beispielsweise kann die Drehfrequenz der ersten Filterfläche doppelt so groß sein wie die Drehfrequenz der zweiten Filterfläche.

Bei der erfindungsgemäßen Beleuchtungsvorrichtung können die Flächensegmente (oder die Flächenabschnitte) der ersten Filterfläche rotes, blaues und grünes Licht der Beleuchtungsstrahlung weiterleiten.

Ferner kann das zweite Farbrad von seiner ersten Stellung, in der ein Teil der zweiten Filterfläche stets in den Beleuchtungsstrahlengang hineinsteht, in eine zweite Stellung gebracht werden, in der kein Teil der zweiten Filterfläche in den Beleuchtungsstrahlengang hineinsteht.

Die Beleuchtungsvorrichtung kann ferner eine Lichtquelle aufweisen, die die Beleuchtungsstrahlung abgibt.

Ferner können weitere Filter vorgesehen sein. Beispielsweise kann ein Ultraviolett-Filter im Beleuchtungsstrahlengang positioniert sein.

Unter dem sichtbaren Wellenlängenbereich wird hier insbesondere der Wellenlängenbereich von 380 nm bis 700 nm verstanden. Unter dem Infrarotbereich wird hier insbesondere der Wellenlängenbereich von größer als 700 nm bis 1000 nm, 2000 nm oder 3000 nm verstanden.

Es wird ferner ein Projektor mit einem Lichtmodulator und einer erfindungsgemäßen Beleuchtungsvorrichtung (einschließlich aller Weiterbildungen) bereitgestellt. Der Lichtmodulator ist insbesondere ein flächiger Lichtmodulator und kann z.B. als Kippspiegelmatrix, LCD-Modul oder LCoS-Modul ausgebildet sein. Des Weiteren kann der Projektor eine Steuereinheit, die die Farbräder und den Lichtmodulator ansteuert, sowie eine Projektionsoptik aufweisen, die das mittels des Lichtmodulators erzeugte Bild auf eine Projektionsfläche projiziert.

Der Projektor ist insbesondere so ausgebildet, dass die verschiedenen Teilbilder zeitsequentiell erzeugt werden. Dabei werden die Teilbilder so schnell hintereinander erzeugt, dass ein Benutzer sie nicht mehr einzeln auflösen kann, sondern nur noch die Überlagerung der Teilbilder als Gesamtbild wahrnimmt.

Der Projektor kann zwei hintereinander angeordnete Lichtmodulatoren aufweisen. Insbesondere ist in diesem Fall eine Abbildungsoptik vorgesehen, die den ersten Lichtmodulator auf den zweiten Lichtmodulator abbildet. Durch das Vorsehen von zwei hintereinander geschalteten Lichtmodulatoren wird der Maximalkontrast des Projektors erhöht.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine schematische Ansicht der erfindungsgemäßen Beleuchtungsvorrichtung und des erfindungsgemäßen Projektors gemäß einer ersten Ausführungsform;
- Fig. 2: eine Draufsicht des ersten Farbrades 11;
- Fig. 3: eine Draufsicht des zweiten Farbrades 13;
- Fig. 4: eine schematische Darstellung zur Erläuterung der zeitlich nacheinander erzeugten Teilbilder T1-T12, und
- Fig. 5: eine schematische Darstellung einer weiteren Ausführungsform des erfindungsgemäßen Projektors.

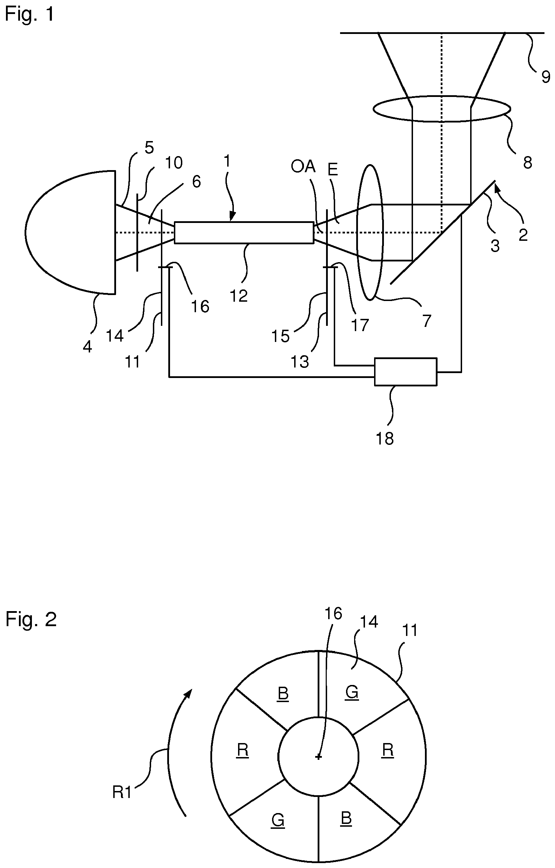

Bei der in Fig. 1 gezeigten Ausführungsform ist die erfindungsgemäße Beleuchtungsvorrichtung 1 in einem erfindungsgemäßen Projektor 2 vorgesehen, der einen Lichtmodulator 3 (z.B. eine Kippspiegelmatrix) aufweist.

Der Projektor 2 umfasst ferner eine Lichtquelle 4, die Beleuchtungsstrahlung 5 mit Wellenlängen aus dem sichtbaren Wellenlängenbereich und aus dem Infrarotbereich abgibt. Die Beleuchtungsstrahlung 5 trifft auf die Beleuchtungsvorrichtung 1, in der sie entlang eines Beleuchtungsstrahlenganges 6 bis zum Ende E des Beleuchtungsstrahlengangs 6 geführt wird und über eine der Beleuchtungsvorrichtung 1 nachgeordnete erste Optik 7 so auf den ersten Lichtmodulator 3 gerichtet wird, dass dieser möglichst gleichmäßig beleuchtet wird. Der Projektor 2 umfasst ferner eine zweite Optik 8, die auch als Projektionsoptik bezeichnet werden kann, die das vom Lichtmodulator 3 modulierte Licht auf eine Projektionsfläche 9 projiziert, um dort ein darzustellendes Bild zu erzeugen.

Die Beleuchtungsvorrichtung 1 umfasst einen Ultraviolett-Filter 10, dem in dieser Reihenfolge ein erstes Farbrad 11, ein Integrator 12 oder ein Lichtmischstab 12 und ein zweites Farbrad 13 nachgeordnet sind. Der Ultraviolett-Filter 10 und der Lichtmischstab 12 sind optional und können auch weggelassen werden.

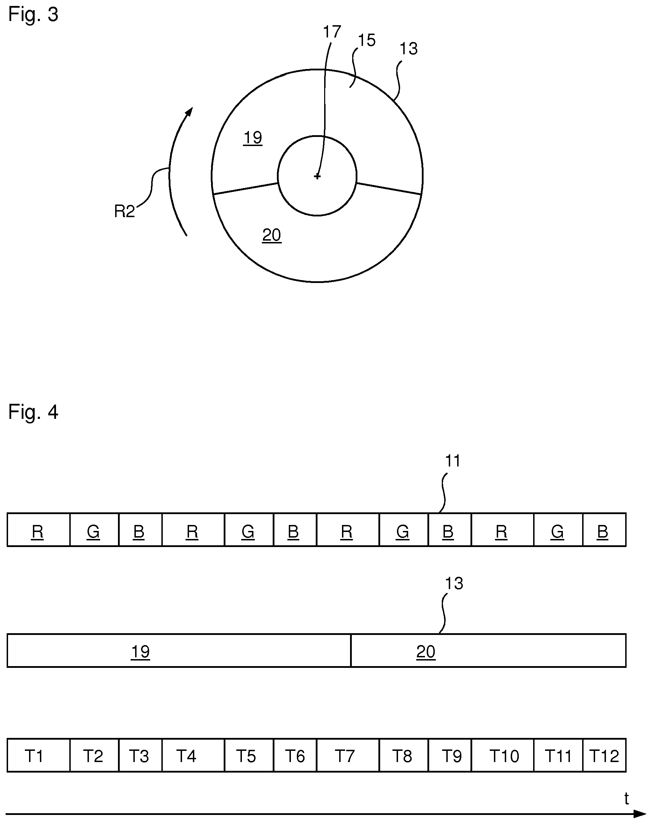

Das erste Farbrad 11 weist eine erste Filterfläche 14 und das zweite Farbrad 13 weist eine zweite Filterfläche 15 auf. Die beiden Filterflächen 14, 15 sind beispielsweise ringförmig ausgebildet, wie in den Draufsichten der beiden Farbfilter 11 und 13 in Fig. 2 und 3 gezeigt ist. Die Filterflächen 14 und 15 sind senkrecht oder unter einem Winkel von ungleich 90° zur optischen Achse OA der Beleuchtungsvorrichtung 1 so angeordnet, dass stets nur ein Teil der jeweiligen Filterfläche 14 und 15 in den Beleuchtungsstrahlengang 6 einsteht. Ferner sind die beiden Farbräder 11 und 13 so ausgebildet, dass die Filterflächen 14 und 15 jeweils um eine Achse 16, 17 drehbar sind, wobei die beiden Achsen 16 und 17 sich parallel zur optischen Achse OA erstrecken können oder einen Winkel von größer als 0° (und somit nicht mehr parallel zur optischen Achse OA) zur optischen Achse OA aufweisen können. Die Farbräder 11 und 13 sowie der Lichtmodulator 3 können mittels einer Steuereinheit 18 des Projektors 2 angesteuert werden.

Die erste Filterfläche 14 weist sechs in Drehrichtung R1 der ersten Filterfläche 14 nebeneinanderliegende Flächensegmente (oder Flächenabschnitte) auf, die mit R, G und B bezeichnet sind. Die Flächensegmente R sind für Beleuchtungsstrahlen mit Wellenlängen für rotes Licht, die Flächensegmente G sind für Beleuchtungsstrahlen mit Wellenlängen für grünes Licht und die Flächensegmente B sind für Beleuchtungsstrahlen mit Wellenlängen für blaues Licht transmissiv und alle Flächensegmente R, G und B sind jeweils für Beleuchtungsstrahlen mit anderen Wellenlängen aus dem sichtbaren Längenbereich nicht transmissiv. Ferner sind nur die Flächensegmente G für Beleuchtungsstrahlen aus dem Infrarotbereich transmissiv. Die anderen Flächensegmente R und B sind für Beleuchtungsstrahlen mit Wellenlängen aus dem Infrarotbereich nicht transmissiv. Die Ausdehnung in Umfangs- und Drehrichtung R1 der einzelnen Flächensegmente R, G, B ist nicht gleich groß. Die größte Ausdehnung weisen die Flächensegmente R auf, die sich hier jeweils um 73° erstrecken. Die Ausdehnung der Flächensegmente G ist kleiner als die der Flächensegmente R und beträgt hier 57°. Die Ausdehnung der Flächensegmente B ist wiederum kleiner als die Ausdehnung der Flächensegmente G und beträgt hier 50°.

Die zweite Filterfläche 15 weist ein erstes Flächensegment 19 und ein zweites Flächensegment 20 auf, die in Drehrichtung R2 der zweiten Filterfläche 15 hintereinander angeordnet sind. Das erste Flächensegment 19 ist für Beleuchtungsstrahlen aus dem sichtbaren Wellenlängenbereich transmissiv und lässt Infrarotstrahlung nicht durch. Das zweite Flächensegment 20 ist für Infrarotstrahlung transmissiv und lässt Beleuchtungsstrahlung aus dem sichtbaren Wellenlängenbereich nicht durch. Die Ausdehnung des ersten Flächensegmentes R in Drehrichtung R2 beträgt hier 200° und die Ausdehnung des zweiten Flächensegments 20 in Drehrichtung R2 beträgt hier 160°.

Die Drehung der beiden Filterflächen 14 und 15 wird mittels der Steuereinheit 18 so durchgeführt, dass die Drehfrequenz der zweiten Filterfläche 15 der halben Drehfrequenz der ersten Filterfläche 14 entspricht. Dies ist in Fig. 4 schematisch dargestellt, wobei die Zeit t entlang der x-Achse aufgetragen ist und jeweils als Rechteck das Flächensegment dargestellt ist, das sich zu dem jeweiligen Zeitpunkt im Beleuchtungsstrahlengang 5 befindet. Daraus ergibt sich, dass spektral aufgelöst 12 Teilbilder T1, T2, T3, ... T12 möglich sind, wobei mittels der Teilbilder T1-T6 die RGB-Anteile des darzustellenden Farbbildes im sichtbaren Wellenlängenbereich erzeugt werden können und mittels der Teilbilder T8 und T11 das gewünschte Infrarotbild erzeugt werden kann. Die Teilbilder T7, T9, T10 und T12 werden schwarz dargestellt. Durch diese Art der Ansteuerung der beiden Farbräder 11 und 13 ist es möglich, mit einer konventionellen Steuereinheit 18, die für die Darstellung von drei Farben (RGB) ausgelegt ist, ein sichtbares Bild basierend auf den drei Farben RGB und zusätzlich das Infrarotbild darzustellen.

Dies wird in bekannter Art und Weise dadurch durchgeführt, dass der Modulator 3 für jedes Teilbild T1-T12 entsprechend angesteuert wird und die Teilbilder T1-T12 zeitlich so schnell aufeinander folgen, dass ein Betrachter die Teilbilder T1-T12 zeitlich nicht unterscheiden kann und somit nur die zeitliche Überlagerung der Teilbilder T1-T12 wahrnimmt. Für den Betrachter wird somit ein Farbbild und ein Infrarotbild gleichzeitig erzeugt.

Das Infrarotbild wird beispielsweise bei Einsatz des erfindungsgemäßen Projektors 2 in einem Flugsimulator genutzt, um Nachtsichtbedingungen unter der Verwendung eines Nachtsichtgerätes trainieren zu können. Der Flugsimulator kann somit beispielsweise die gewünschten Infrarotbilder erzeugen, die ein Benutzer des Flugsimulators mit seinem Nachtsichtgerät wahrnehmen kann. Mit solchen Flugsimulatoren kann z.B. das Fliegen und Bedienen eines Flugzeuges oder eines Hubschraubers trainiert werden.

Der erfindungsgemäße Projektor 2 wird insbesondere so ausgebildet, dass durch seinen Aufbau ein so hoher Kontrast erreicht wird, dass durch die Teilbilder T7, T9, T10 und T12 keine Erregung des Nachtsichtgerätes verursacht wird. Weiterhin hilft ein sehr hoher Kontrast des Projektors 2 auch bei der Darstellung von niedrigen Helligkeitswerten. Wenn der Projektor 2 für den Kontrast von vollständig ein zu vollständig aus den Wert von ca. 2,5 x 10⁶:1 erreicht, können die Intensitäten der niedrigen Helligkeitswerte für einen γ-Wert von 2,2, die in der Größenordnung von 10⁻⁵ bis 10⁻⁶ der Maximalintensität liegen, korrekt dargestellt werden. Damit können die natürlichen Verhältnisse für ein Nachtsichtgerät gut simuliert werden.

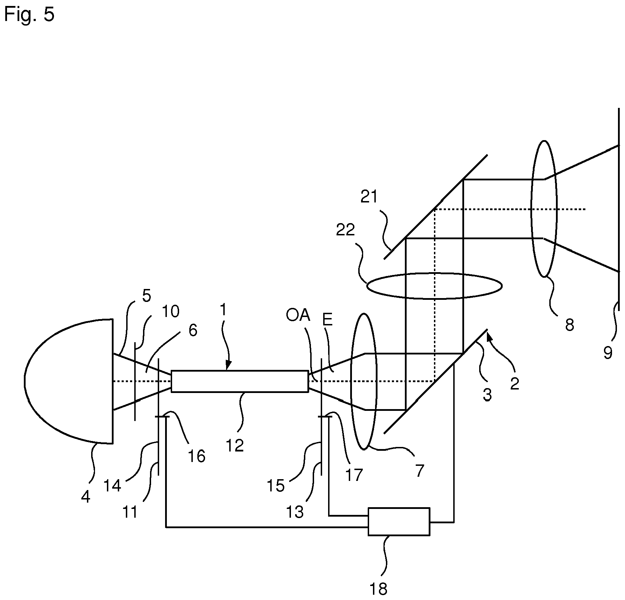

Ein solcher Kontrast kann beispielsweise dadurch erreicht werden, dass dem Lichtmodulator 3 ein zweiter Lichtmodulator 21 nachgeordnet ist, wie bei der Variante des erfindungsgemäßen Projektors 2 in Fig. 5 gezeigt ist. Zwischen den beiden Lichtmodulatoren 3 und 21 ist bevorzugt eine Abbildungsoptik 22 angeordnet, die den Lichtmodulator 3 auf den zweiten Lichtmodulator 21 abbildet. Die Abbildungsoptik 22 kann beispielsweise eine 1:1-Abbildungsoptik sein.

Vorteilhaft ist bei dem erfindungsgemäßen Projektor 2, dass nur eine Lichtquelle 4 zur Darstellung des sichtbaren Bildes und des Infrarotbildes benötigt wird. Die Lichtquelle 4 muss zwar auch die benötigte Leistung im infraroten Spektralbereich bereitstellen. Aufgrund der hohen Empfindlichkeit der heute verfügbaren Nachtsichtgeräte kann diese Leistung aber relativ klein sein.

Durch weitere (nicht gezeigte) Filter im Strahlengang des Projektors 2 und insbesondere im Beleuchtungsstrahlengang 5 kann das Verhältnis der Leistungen im sichtbaren und im infraroten Spektralbereich angepasst werden. Damit können verschiedene Nachtsichtbedingungen wie heller Vollmond und Neumond simuliert werden.

Der Projektor 2 kann so ausgebildet sein, dass das zweite Farbrad 13 komplett aus dem Beleuchtungsstrahlengang 5 herausgefahren werden kann. Insbesondere ist der Projektor 2 dann so ausgebildet, dass in diesem Fall die gleiche Leistung im sichtbaren Spektralbereich vorliegt, die in dem Fall vorliegt, dass ein Projektor ohne eine spezielle Beleuchtungsvorrichtung zur Erzeugung von Bildern im infraroten Spektralbereich verwendet wird.

Natürlich kann die Reihenfolge der beiden Farbräder 11 und 13 vertauscht sein. Auch ist es nicht notwendig, dass der Lichtmischstab 12 zwischen den beiden Farbrädern 11 und 13 angeordnet ist. Die beiden Farbräder 11 und 13 können z.B. unmittelbar hintereinander angeordnet sein.

Ferner können die spektralen Eigenschaften der Farbräder 11 und 13 anders gestaltet werden. Insbesondere können zusätzlich oder alternativ die Segmente B und/oder die Segmente R so gestaltet sein, dass sie die Beleuchtungsstrahlung aus dem Infrarotbereich transmittieren.

Des Weiteren kann die Anzahl der verwendeten Teilbilder T1-T12 für die einzelnen Spektralbereiche variiert werden. Auch kann die Gesamtzahl der verwendeten Teilbilder variiert werden. Des Weiteren können die Drehzahlen der beiden Farbräder 11 und 13 variiert werden.

## Patentansprüche

1. Beleuchtungsvorrichtung für einen einen Lichtmodulator (3, 21) aufweisenden Projektor (2), mit
einem Beleuchtungsstrahlengang (6), der eingekoppelte Beleuchtungsstrahlung (5) mit Wellenlängen aus dem sichtbaren Wellenlängenbereich und aus dem Infrarotbereich bis zu seinem Ende (E) führt, um den Lichtmodulator (3, 21) zu beleuchten,
einem ersten eine erste Filterfläche (14) aufweisenden und einem zweiten eine zweite Filterfläche (15) aufweisenden Farbrad (11, 13), die hintereinander angeordnet sind und deren Filterflächen (14, 15), die jeweils um eine Achse (16, 17) drehbar sind, nur zum Teil in den Beleuchtungsstrahlengang (6) hineinstehen,
wobei die erste Filterfläche (14) in Drehrichtung mindestens drei hintereinander angeordnete Flächensegmente (R, G, B), die bei Drehung der ersten Filterfläche (14) nacheinander in den Beleuchtungsstrahlengang (6) hineinstehen und jeweils Beleuchtungsstrahlung eines anderen Teilbereiches aus dem sichtbaren Wellenlängenbereich weiterleiten, aufweist,
wobei mindestens eines der Flächensegmente (R, G, B) der ersten Filterfläche (14) ferner Beleuchtungsstrahlung (5) aus dem Infrarotbereich weiterleitet,
und wobei die zweite Filterfläche (15) ein erstes Flächensegment (19), das nur Beleuchtungsstrahlung (5) aus dem sichtbaren Wellenlängenbereich weiterleitet und ein zweites Flächensegment (20), das nur Beleuchtungsstrahlung (5) aus dem Infrarotbereich weiterleitet, aufweist,
wobei das erste und zweite Flächensegment (19, 20) in Drehrichtung hintereinander angeordnet sind und bei Drehung der zweiten Filterfläche (15) nacheinander in den Beleuchtungsstrahlengang (6) hineinstehen.

2. Beleuchtungsvorrichtung nach Anspruch 1, bei der die erste Filterfläche (14) der zweiten Filterfläche (15) vorgeordnet ist.

3. Beleuchtungsvorrichtung nach Anspruch 1, bei der die erste Filterfläche (14) der zweiten Filterfläche nachgeordnet ist.

4. Beleuchtungsvorrichtung nach einem der obigen Ansprüche, bei der die beiden Filterflächen (14, 15) transmissive Filter sind.

5. Beleuchtungsvorrichtung nach einem der obigen Ansprüche, bei der zwischen den beiden Filterflächen (14, 15) ein Lichtmischstab (12) angeordnet ist.

6. Beleuchtungsvorrichtung nach einem der obigen Ansprüche, bei der die beiden Filterflächen (14, 15) ringförmig ausgebildet sind.

7. Beleuchtungsvorrichtung nach einem der obigen Ansprüche, bei der die Drehfrequenz der ersten Filterfläche (14) größer ist als die Drehfrequenz der zweiten Filterfläche (15).

8. Beleuchtungsvorrichtung nach einem der obigen Ansprüche, bei der die Flächensegmente der ersten Filterfläche (14) rotes, blaues und grünes Licht der Beleuchtungsstrahlung weiterleiten.

9. Beleuchtungsvorrichtung nach einem der obigen Ansprüche, bei der das zweite Farbrad (13) von seiner ersten Stellung, in der ein Teil der zweiten Filterfläche (15) in den Beleuchtungsstrahlengang (6) hineinsteht, in eine zweite Stellung gebracht werden kann, in der kein Teil der zweiten Filterfläche (15) in den Beleuchtungsstrahlengang (6) hineinsteht.

10. Projektor mit einem Lichtmodulator (3, 21) und einer Beleuchtungsvorrichtung nach einem der obigen Ansprüche.
